# EUROPÄISCHE PATENTANMELDUNG

(11) **EP 2 446 953 A1**
(43) Veröffentlichungstag der Anmeldung: **02.05.2012**
(21) Anmeldenummer: 11184589.7
(22) Anmeldetag: 11.10.2011
(51) Int. Cl.: B01D 53/26

(54) **Vorrichtung zum Trocknen von Fluid und Verfahren zum Betreiben derselben**

(30) Priorität: 27.10.2010 DE 102010049487
(71) Anmelder: MANN + HUMMEL ProTec GmbH, 64625 Bensheim (DE)
(72) Erfinder: Zlotos, Michael, 68647 Biblis (DE); Kusch, Thomas, 63452 Hanau (DE)

(57) **Zusammenfassung**

Die Erfindung beschreibt eine Vorrichtung (1) zum Trocknen von einem Fluid (26), insbesondere von feuchter Luft, mit mindestens drei Behältern (2, 3, 4) für Trockenmittel (11), welche jeweils eine Einlassöffnung (5, 6, 7) und eine Auslassöffnung (8, 9, 10) umfassen, einer ersten und einer zweiten Halteplatte (12, 13) wobei die Einlassöffnungen (5, 6, 7) an die erste Halteplatte (12) und die Auslassöffnungen (8, 9, 10) an die zweite Halteplatte (13) gekoppelt sind, und die Halteplatten (12, 13) jeweils Durchlässe (14 - 17) für durch die Einlassöffnungen (5, 6, 7) oder durch die Auslassöffnungen (8, 9, 10) strömendes Fluid (26 - 29) umfassen, mit einem ersten Anschlussteil (20), welches auf der ersten Halteplatte (12) anliegt und eine erste Mischkammer (22) zum Zusammenführen eines Fluidstroms durch mindestens zwei der Durchlässe (14, 15) zu einem ersten gemeinsamen Anschluss (24) aufweist, und einem zweiten Anschlussteil (21), welches auf der zweiten Halteplatte (13) anliegt und eine zweite Mischkammer (23) zum Zusammenführen eines Fluidstroms durch mindestens zwei der Durchlässe (17, 18) zu einem zweiten gemeinsamen Anschluss (25) aufweist, wobei die Halteplatten (12, 13) und die Anschlussteile (20, 21) gegeneinander drehbar angeordnet sind.

## Beschreibung

### Technisches Gebiet

Die Erfindung betrifft eine Vorrichtung zum Trocknen von Fluid, insbesondere von feuchter Luft, sowie ein Verfahren zum Betreiben derselben. Beim Trocknen von Kunststoffgranulaten mit Luft wird die mit Feuchtigkeit angereicherte Luft beispielsweise mit einer entsprechenden Trocknungsvorrichtung aufbereitet.

### Stand der Technik

Bei der Kunststoffverarbeitung werden Kunststoffe häufig in der Form von Granulaten bereitgestellt. Da in Abhängigkeit vom Kunststoffmaterial dasselbe hygroskopische Eigenschaften haben kann und damit Feuchtigkeit anzieht, muss zur Weiterverarbeitung entsprechendes Granulat getrocknet werden. Dies erfolgt in bekannten Trocknersystemen, bei denen getrocknete Trockenluft durch das Kunststoffgranulat als Schüttgut geführt wird und dabei Feuchtigkeit von dem Kunststoffgranulat aufnimmt und abführt. Die derart mit Feuchtigkeit angereicherte Luft muss anschließend in entsprechenden Trocknern gereinigt und aufbereitet werden. Die zu trocknende Luft wird dabei über Trocknungsmedien wie beispielsweise Zeolite geführt, welche die Feuchtigkeit absorbieren und gereinigte, getrocknete Luft schaffen.

Beispielsweise ist aus der DE 698 33 507 T2 ein System zur Steuerung eines Luftdurchflusses in einem Trocknungssystem beschrieben, bei dem eine Doppelkolonne vorgesehen ist. In den beiden Kolonnen ist jeweils ein Absorptionsmedium für die Lufttrocknung vorgesehen. Es wird vorgeschlagen, abwechselnd eine Kolonne zur Entfeuchtung von Luft einzusetzen, während die zweite Kolonne mit einem Regenerationsgas umströmt wird. Das vorgeschlagene System benötigt verschiedene Sperrventile und eine aufwendige Steuerung.

Der Erfindung liegt somit die Aufgabe zugrunde, eine verbesserte Vorrichtung zum Trocknen von Fluiden bereitzustellen.

### Offenbarung der Erfindung

Diese Aufgabe wird durch eine Vorrichtung mit den Merkmalen des Anspruchs 1 gelöst. Demgemäß wird eine Vorrichtung zum Trocknen von einem Fluid, insbesondere von feuchter Luft vorgeschlagen, welche mindestens drei Behälter für Trockenmittel mit jeweils einer Einlassöffnung und einer Auslassöffnung umfasst. Die Vorrichtung weist eine erste und eine zweite Halteplatte auf, wobei die Einlassöffnungen an die erste Halteplatte und die Auslassöffnungen an die zweite Halteplatte gekoppelt sind. Die Halteplatten haben jeweils Durchlässe für durch die Einlassöffnungen oder durch die Auslassöffnungen strömendes Fluid. Die Vorrichtung umfasst ferner ein erstes Anschlussteil, welches auf der ersten Halteplatte anliegt, mit einer ersten Mischkammer zum Aufteilen eines Fluidstroms von einem ersten gemeinsamen Anschluss auf mindestens zwei der Durchlässe, und ein zweites Anschlussteil, welches auf der zweiten Halteplatte anliegt, mit einer zweiten Mischkammer zum Zusammenführen eines Fluidstroms durch mindestens zwei der Durchlässe zu einem zweiten gemeinsamen Anschluss. Dabei sind die Halteplatten und die Anschlussteile gegeneinander drehbar angeordnet.

Die Vorrichtung ermöglicht sequentiell einerseits mit Feuchtigkeit angereichertes Fluid, wie Luft, durch Behälter mit Trockenmittel, wie beispielsweise Zeolithe oder andere stark hygroskopische Materialien, zu durchströmen, da eine Fließverbindung zwischen der ersten Mischkammer und der zweiten Mischkammer entsteht. Andererseits kann gleichzeitig eine Regeneration des Trockenmittels in dem nicht mit der Mischkammer gekoppelten Behälter vollzogen werden. Durch die gegeneinander drehbare Anordnung der Halteplatten mit den Anschlussteilen ergibt sich eine wiederkehrende Sequenz für jeden Behälter von einer Regenerationsphase und einer Filter- oder Trocknungsphase.

Das erste Anschlussteil kann ferner einen Führungsabschnitt zum Leiten eines Fluidstroms von einem ersten weiteren Anschluss durch einen dritten Durchlass in der ersten Halteplatte umfassen. Das zweite Anschlussteil kann ferner einen Führungsabschnitt zum Leiten eines Fluidstroms durch einen dritten Durchlass in der zweiten Halteplatte zu einem zweiten weiteren Anschluss umfassen.

Es ist somit möglich, durch Herstellen einer Fließverbindung zwischen dem ersten und dem zweiten Anschluss in Abhängigkeit von der Stellung der Halteplatten und der Anschlussteile zueinander parallel zur Trocknung von feuchter Luft eine Regeneration von Trockenmittel vorzunehmen.

Bei einer Ausführungsform hat das erste Anschlussteil und das zweite Anschlussteil jeweils ein Langloch, welches die mindestens zwei Durchlässe überdeckt. Alternativ kann die Mischkammer in der Art einer Kappe, die mindestens zwei Durchlässe in der jeweiligen Halteplatte abdeckt, ausgeführt sein. Anschlussflächen der Anschlussteile liegen auf der jeweiligen Halteplatte auf.

Vorzugsweise sind die Halteplatten und die jeweils daran aufliegenden Anschlussteile fluiddicht aneinander liegend. Ein erster Fluidstrom, wie beispielsweise ein Luftstrom, erfolgt dann einerseits jeweils zwischen der ersten und zweiten Mischkammer durch die entsprechenden Einlass- und Auslassöffnungen sowie die Durchlässe in der Halteplatte, und andererseits erfolgt ein davon getrennter zweiter Fluidstrom durch den jeweiligen dritten Durchlass der dazugehörigen Einlass- und Auslassöffnung sowie den Durchlässen in der Halteplatte. Der erste Fluidstrom dient dem Trocknen eines zu trocknenden Fluids, und der zweite Fluidstrom dient der Regeneration des Absorptions- oder Trockenmittels.

Die Behälter für Trockenmittel können beispielsweise als zylindrische Trockenmitteltöpfe ausgeführt sein, wobei eine jeweilige Einlassöffnung und Auslassöffnung an gegenüberliegenden Grundflächen angeordnet ist.

Bei einer Ausführungsform der Vorrichtung zum Trocknen von einem Fluid ist ferner eine Heizeinrichtung vorgesehen zum Erzeugen von erwärmtem Regenerationsfluid, wie beispielsweise erhitzter Luft, wobei das erwärmte Regenerationsfluid dem ersten oder dem zweiten weiteren Anschluss zugeführt ist.

Es kann ferner eine Antriebseinrichtung zum Drehen der Halteplatten mit den zwischen den Halteplatten angeordneten Behältern und eine Steuereinrichtung vorgesehen sein. Die Steuereinrichtung steuert die Antriebseinrichtung vorzugsweise derart, dass die Halteplatten und die Anschlussteile so positioniert sind, dass nacheinander taktweise jeweils ein Behälter von erwärmtem Regenerationsfluid durchströmt wird, und gleichzeitig eine Fließverbindung für zu trocknendes Fluid von der ersten Mischkammer zu der zweiten Mischkammer vorliegt.

Es ist von Vorteil, eine getaktete und nichtkontinuierliche Drehung der Behälter mit den Halteplatten vorzunehmen.

Es ergeben sich somit für jeden Behälter für Trockenmittel feste definierte Zeitpunkte und Zeitabschnitte für eine Regeneration und einen Trocknungsbetrieb.

Es kann darüber hinaus eine Temperaturmesseinrichtung zum Erfassen einer Fluidtemperatur an dem ersten und/oder zweiten weiteren Anschluss vorgesehen sein. Die Temperaturmesseinrichtung erfasst beispielsweise eine Temperatur am Auslass eines Behälters, der von Regenerationsfluid, also heißer Luft, durchströmt wird.

In Abhängigkeit von der gemessenen Temperatur kann dann die Steuereinrichtung die Antriebseinrichtung ansteuern. Wird beispielsweise eine vorgegebene Temperatur an der Ausströmöffnung des jeweiligen Behälters erreicht, erfolgt ein Weiterdrehen der Halteplatten gegenüber den Anschlussteilen. Damit kann ein anderer Behälter mit Trockenmittel in eine Regenerationsphase überführt werden.

Vorzugsweise umfassen das erste Anschlussteil und das zweite Anschlussteil ferner jeweils einen weiteren Führungsabschnitt zum Leiten eines Fluidstroms zu einem weiteren Anschluss. Dabei hat der weitere Führungsabschnitt einen geringeren Querschnitt als der erste Führungsabschnitt.

Beispielsweise kann der weitere Führungsabschnitt dazu verwendet werden, nach einer Regeneration mit heißer Luft den jeweiligen Behälter abzukühlen, indem gekühlte, trockene Luft hindurch geblasen wird und durch die Führungsabschnitte geleitet wird.

Ferner wird ein Verfahren zum Betreiben einer entsprechenden Vorrichtung zum Trocknen von einem Fluid vorgeschlagen. Dabei werden die die Halteplatten mit den zwischen den Halteplatten angeordneten Behältern derart taktweise gegenüber den Anschlussteilen gedreht, dass ein Behälter von erwärmtem Regenerationsfluid durchströmt wird, und gleichzeitig eine Fließverbindung für zu trocknendes Fluid von der ersten Mischkammer zu der zweiten Mischkammer vorliegt.

Gegenüber einem kontinuierlichen Antrieb wird eine Schrittpositionierung der Halteplatte mit den Behältern vorgeschlagen.

Vorzugsweise ist ferner vorzugsweise nur ein Behälter derart positioniert, dass ihn ein Regenerationsfluid durchströmt. Es erfolgt somit eine Schrittpositionierung, bei der die Anschlussteile und die Durchlässe in den Halteplatten fest vorgegebene Positionen zueinander einnehmen. Gegenüber eine kontinuierlichen Antrieb erfolgt bei dem schrittweisen Drehen keine vorübergehende Querschnittsänderung an den Übergängen zwischen den Durchlässen in der Halteplatte und den Anschlussteilen während eines Durchströmens mit Fluid.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
Fig. 1 eine schematische Querschnittsdarstellung einer ersten Ausführungsform einer Trocknungsvorrichtung für Fluid;
Fig. 2 schematische Darstellungen der ersten Ausführungsform in der Draufsicht;
Fig. 3 eine schematische Darstellung einer zweiten Ausführungsform einer Trocknungsvorrichtung in der Draufsicht zur Erläuterung eines Verfahrens zum Betrieb derselben;
Fig. 4 eine schematische Darstellung einer dritten Ausführungsform einer Trocknungsvorrichtung; und
Fig. 5 eine perspektivische Darstellung einer vierten Ausführungsform einer Trocknungsvorrichtung;

In den Figuren bezeichnen dieselben Bezugszeichen gleiche oder funktionsgleiche Elemente, soweit nichts Gegenteiliges angegeben ist.

### Ausführungsform(en) der Erfindung

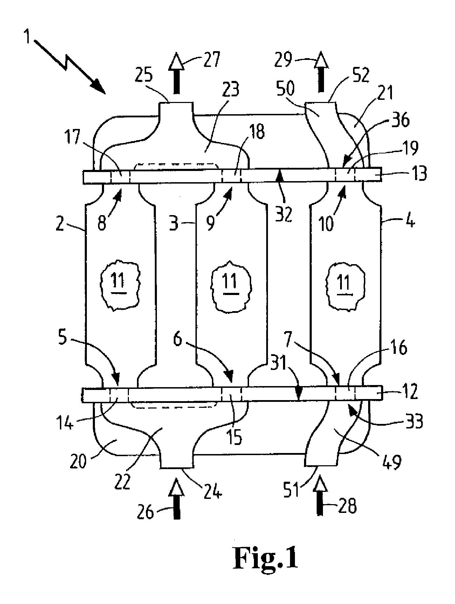

Figur 1 zeigt eine schematische Querschnittsdarstellung einer ersten Ausführungsform einer Trocknungsvorrichtung für Fluide. Die Vorrichtung eignet sich insbesondere zum Trocknen von Luft, welche anschließend für die Kunststoffgranulattrocknung eingesetzt wird. In Figur 1 erkennt man die Trocknungsvorrichtung 1 im Querschnitt. Es sind drei zylindrische Behälter 2, 3, 4 für Trockenmittel 11 vorgesehen. Als Trockenmittel 11 eignen sich hygroskopische Substanzen, die Feuchtigkeit von durchströmendem Fluid aufnehmen und dadurch das Fluid entfeuchten. Bekannt sind beispielsweise Zeolithe, die in den Behältern 2, 3, 4 als Trockenmittel 11 vorgesehen sind. Man bezeichnet die Behälter 2, 3, 4 auch als Trockenmitteltöpfe. Die Trockenmitteltöpfe 2, 3, 4 haben jeweils in der Orientierung in Figur 1 untere Einlassöffnungen 5, 6, 7 und obere Auslassöffnungen 8, 9, 10.

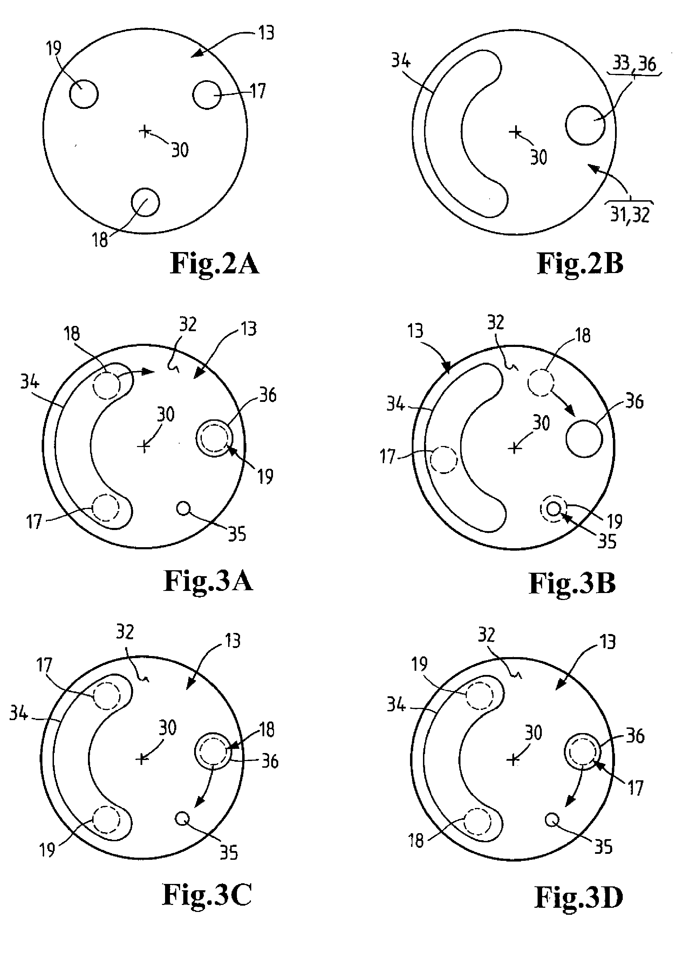

Die Einlassöffnungen 5, 6, 7 sind an eine erste untere Halteplatte 12 gekoppelt und die Auslassöffnungen 8, 9, 10 an eine obere zweite Halteplatte 13. In Figur 2A ist beispielsweise eine Draufsicht der oberen Halteplatte 13 dargestellt. Man erkennt Durchlässe 17, 18, 19, welche einen Fluidfluss zwischen den Innenräumen der Trockenmitteltöpfe 2, 3, 4 durch deren Auslassöffnungen 8, 9, 10 ermöglichen.

Die Trocknungsvorrichtung 1 umfasst ferner ein unteres erstes Anschlussteil 20 und einen oberes zweites Anschlussteil 21. Die Anschlussteile 20, 21 liegen auf den Außenseiten der Halteplatten 12, 13 im wesentlichen fluiddicht auf. Allerdings sind die Halteplatten 12, 13 und die Anschlussteile 20, 21 um eine Drehachse 30 gegeneinander drehbar. Die Anschlussteile 20, 21 dienen dazu, einerseits eine Fließverbindung von einem unteren Anschluss 51 zu einem oberen Anschluss 52 durch einen der Trockenmitteltöpfe 4 zu schaffen. Dazu ist in dem unteren Anschlussteil 20 ein Führungsabschnitt 49, beispielsweise als Kanal ausgebildet, der in die Auflagefläche 31 des Anschlussteils 20 mündet, die der unteren Halteplatte 12 zugewandt ist bzw. darauf aufliegt. Das Anschlussteil 20 hat, wie man in Figur 2B in der Draufsicht erkennen kann, eine Öffnung 33, die in der Position, wie sie in Figur 1 dargestellt ist, mit dem Durchlass 16 der Halteplatte 12 koppelt.

Analog hat das obere Anschlussteil 21 einen Kanal oder einen Führungsabschnitt 50, der einen Anschluss 52 mit der Auflagefläche 32 des Anschlussteils 21 verbindet. Der Kanal 50 koppelt mit dem Durchlass 19 für die Auslassöffnung 10 des Behälters 4. Insofern entsteht eine Fließverbindung zwischen dem unteren Anschluss 51 und dem oberen Anschluss 52. Beispielsweise wird ein Regenerationsfluid, wie erhitzte Luft 28, an dem unteren Anschluss 51 eingeströmt, durch den Trockenmitteltopf 4 geführt und anschließend über den Anschluss 52 als Abluft 29 abgeleitet.

Die beiden Anschlussteile 20, 21 dienen andererseits dazu, einen Fluidstrom für zu trocknendes Fluid 26 durch die übrigen beiden Trockenmitteltöpfe 2, 3 zu leiten. Dazu hat das untere Anschlussteil 20 eine Mischkammer 22, die einerseits zu einem unteren Anschluss 24 für zu filterndes Fluid 26 führt und andererseits zu beiden Durchlässen 14, 15 in der Halteplatte 12 reicht. In Figur 2B erkennt man die Ausführung der Mischkammer beispielsweise mit einem Langloch 34 als Anschlussfläche zu der Halteplatte. Figur 2B zeigt die Auflagefläche 31 bzw. 32 des unteren Anschlussteils 20 bzw. des oberen Anschlussteils 21. Das Langloch 34 führt in die Mischkammer 22. Analog ist das obere Anschlussteil 21 mit einer Mischkammer 23 ausgestattet, die von der Auflagefläche 32 zu einem Anschluss 25 reicht. Aus dem Anschluss 25 kann das entfeuchtete Fluid 27 abgeführt werden. Die beiden Mischkammern 22, 23 sind beispielsweise in der Art einer Kuppel gebildet und ermöglichen einen Fluiddurchfluss zwischen dem Anschluss 24 und dem Anschluss 25 durch die beiden Trockenmitteltöpfe 2, 3.

Das System aus Halteplatten 12, 13 und den dazwischen befestigten Trockenmitteltöpfen 2, 3, 4 ist gegenüber den feststehenden Anschlussteilen 20, 21 drehbar. Man erkennt insbesondere in der Figur 2A, dass durch eine Drehung der beiden Flächen (den Auflageflächen 31, 32 der Anschlussteile 20, 21) und den daran anliegenden Flächen der Halteplatten 12, 13, verschiedene Durchströmungen erreicht werden können. Man kann auch von einem Trocknungskarussell sprechen, welches um eine Drehachse 30 rotierbar ist.

Figur 3 zeigt eine schematische Darstellung einer Trocknungsvorrichtung in der Draufsicht. Man erkennt in Figur 3 zum Beispiel die unteren Fläche eines oberen Anschlussteils, wie es beispielsweise in Figur 1 mit 21 bezeichnet ist. Die Auflagefläche 32 hat dabei ein um die Drehachse 30 gewundenes Langloch 34, ein Loch 36 und ein Loch 35. In der Darstellung der Figur 3 blickt man im Vergleich zur Figur 1 von oben auf die Trocknungsvorrichtung. Insofern erkennt man unterhalb gestrichelt dargestellt die Halteplatte 13 mit den drei Durchlässen 17, 18, 19. Beim Betrieb der Trocknungsvorrichtung wird das Karussell aus den Halteplatten mit den Trockenmitteltöpfen um die aus der Zeichnungsebene herausstehende Drehachse 30 rotiert. Dies erfolgt beispielsweise durch einen gesteuerten Antrieb.

In der Betriebssituation, wie es in Figur 3A dargestellt ist, werden die Trockenmitteltöpfe 2, 3 im Trocknungsbetrieb betrieben, das heißt, zu entfeuchtendes Fluid 26 durchströmt das in den Trockenmitteltöpfen 2, 3 vorgesehen Trockenmittel 11. Parallel dazu wird der Trockenmitteltopf 4 im Regenerationsbetrieb betrieben. D.h., durch den Trockenmitteltopf 4 strömt Regenerationsfluid 28, beispielsweise heiße Luft, da der Durchlass 19 an den Kanal 50 über die Öffnung 36 in dem Anschlussteil 21 gekoppelt ist. Nachdem die Regenerationsphase für den Behälter 4 abgeschlossen ist, wird das Karussell aus den Halteplatten 12, 13 mit den Behältern 2, 3, 4 um die Rotationsachse 30 gegenüber den Anschlussteilen 20, 21 gedreht.

Figur 3B zeigt, wie sich die Positionen der Durchlässe 17, 18, 19 nach der schrittweisen Drehung gegenüber den Auflageflächen 31, 32 der Anschlussteile 20, 21 mit den Löchern 34, 35, 36 verändert haben. Es ist das Loch 35 nun an den Durchlass 19 gekoppelt. Es ist nun möglich, den erhitzten Behälter 4 abzukühlen, indem durch den Behälter 4 kühle Luft geführt wird.

Anschließend wird das Karussell weiter entlang der Pfeilrichtung gedreht, bis die beiden Durchlässe 17, 19 für die Behälter 2, 4 mit dem Langloch 34 bzw. die Mischkammer 22 koppeln und gleichzeitig der Behälter 3 über den Durchlass 18 an das Loch 36 koppelt. Somit wird bei diesem in Figur 3C dargestellten Takt, der Behälter 3 regeneriert.

Figur 3D zeigt den Folgetakt, nachdem das Karussell mit den Halteplatten 12, 13 und den Behältern 2, 3, 4 weiter gedreht wurde. Nun ist der Behälter 2 in der Regenerationsphase und wird durch erhitzte Luft regeneriert. Gleichzeitig sind die Behälter 3, 4 in der Trocknungsphase, das heißt durch die beispielsweise in Figur 1 dargestellten Anschlüsse 24, 25, durchströmt zu entfeuchtendes Fluid 26 die Trockenmitteltöpfe 3, 4.

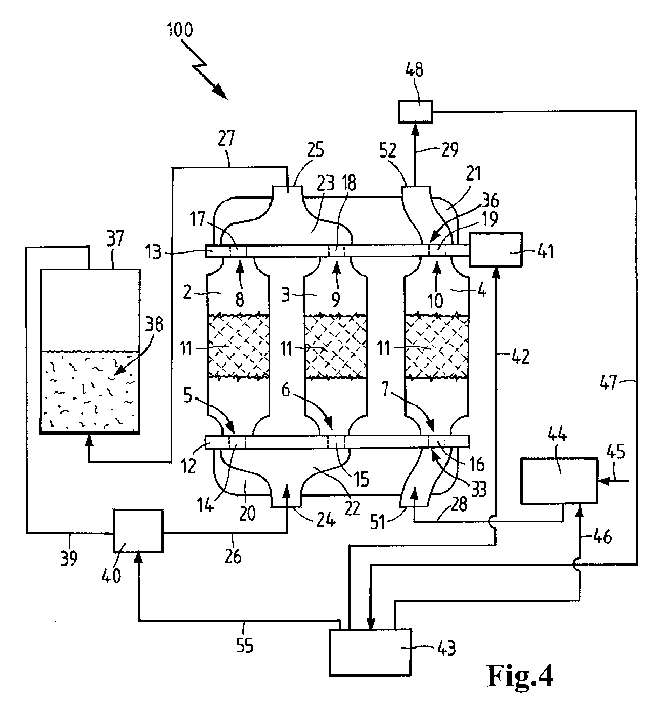

Figur 4 zeigt eine dritte Ausführungsform einer Trocknungsvorrichtung. Auf die Elemente, welche bereits hinsichtlich der Figur 1 beschrieben sind, wird hier nicht näher eingegangen. Die Trocknungsvorrichtung 100 umfasst dabei ein Trockenkarussell, wie es beispielsweise in Figur 1 dargestellt ist, mit zwischen Halteplatten 12, 13 vorgesehenen Trockenmitteltöpfen 2, 3, 4. Die Halteplatten 12, 13 sind zwischen Anschlussteilen 20, 21 drehbar vorgesehen. Das untere Anschlussteil umfasst einen Anschluss 24 für zu trocknendes Fluid und einen Anschluss 51 für erhitzte Luft als Regenerationsmittel. Das obere Anschlussteil 21 hat einen Ausgangsanschluss 25 für getrocknetes Fluid bzw. getrocknete Luft 27 und einen Ausgang 52 für Regenerationsmittel 29, das bereits mit Feuchtigkeit von einem regenerierten Absorptionsmittel beaufschlagt ist. Diese feuchte Regenerationsabluft 29 wird in die Umgebung abgegeben. Wie bereits hinsichtlich der Figuren 1 bis 3 erläutert wurde, lassen sich getaktet für die einzelenen Trockenmitteltöpfe 2, 3, 4 Regenerationsphasen und Trocknungsphasen einstellen. Dies erfolgt in Abhängigkeit von der Drehung des Trockenkarussells gebenüber den Anschlussteilen.

Es ist ein Stellmotor oder eine Antriebseinrichtung 41 vorgesehen, welche das System aus Halteplatten 12, 13 und Trockenmitteltöpfen 2, 3, 4 drehen kann. Eine Steuereinrichtung 43 liefert die entsprechenden Steuersignale 42 an die Antriebseinrichtung 41. Es ist ferner ein Trocknungssilo 37, beispielsweise für Kunststoffgranulat 38, dargestellt, welches mit der Trocknungsluft 27 durchströmt wird. Dazu sind Leitungen für die Trocknungsluft 27 in das Silo 37 und eine Abluftleitung 39 vorgesehen. Beispielsweise kann ein Gebläse 40 vorgesehen sein, welches einen Luftstrom der feuchten Luft 26 durch die Trockenmitteltöpfe 2, 3 und über die Leitung 27 in das Silo 37 erzeugt. Entsprechende Steuersignale 55 werden von der Steuereinrichtung 43 geliefert.

Außerdem ist eine Heizeinrichtung 44 vorgesehen, welche heiße Regenerationsluft erzeugt, die über eine Leitung 28 dem Anschluss 51 zugeführt wird. Die Heizung 44 ist wiederum über Steuersignale 46 von der Steuereinrichtung 43 gesteuert, saugt Umgebungsluft 45 an und bläst diese in den jeweiligen Trockenmitteltopf 4, der in der Regenerationsposition im Karussell vorliegt ist.

Darüber hinaus ist ein Temperatursensor 48 vorgesehen, welcher ein Sensorsignal 47 an die Steuereinrichtung 43 liefert. Es wird beispielsweise die Temperatur der Regenerationsabluft 29 erfasst. Sofern die Auslasstemperatur eine vorgegebene Temperatur im Bereich zwischen 110°C und 170°C, beispielsweise 140°C erreicht, ist die Regeneration des Trockenmittels 11 abgeschlossen. Dies erkennt die Steuereinrichtung 43 und veranlasst den Stellantrieb 41 zur Drehung des Trockenkarussells 2, 3, 4, 12, 13 in eine Folgeposition, beispielsweise wie es hinsichtlich der Figur 3A bis 3D erläutert wurde. In einer vorteilhaften Weiterbildung der Erfindung wird die Zeit bei der Regeneration bis zum Erreichen der vorgegebenen Temperatur der Regenerationsabluft 29 gemessen und mit einer Referenzzeit für einen Trockenmitteltopf 2, 3, 4 mit vollständig gesättigtem Trockenmittel 11 verglichen, um die Beladung des Trockenmitteltopfes zu ermitteln. Nähert sich die Beladung dem Maximum, kann die Schrittgeschwindigkeit der Drehung beschleunigt werden. Ist die Beladung gering, kann die Schrittgeschwindigkeit verringert werden, um die Beladung zu optimieren. Dadurch kann der Energieverbrauch minimiert werden.

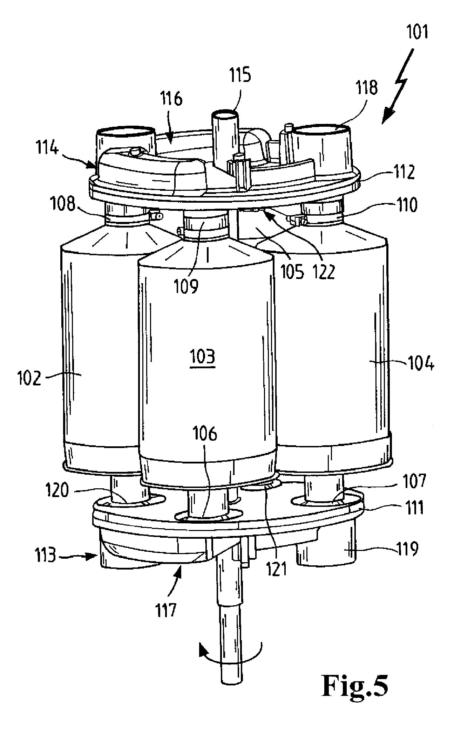

Schließlich zeigt Figur 5 eine weitere Ausführungsform eines Trockenkarussells bzw. einer Vorrichtung zum Trocknen von Fluid 101. Man erkennt ein Karussell mit vier Trockenmitteltöpfen 102, 103, 104, 105, welche zylinderförmig ausgebildet sind. Die Trockenmitteltöpfe 102, 103, 104, 105 haben jeweils Einlassanschlüsse 120, 121, 107, 106, die jeweils mit einem Flansch an eine untere Halteplatte 111 angebracht sind. Es sind ferner Ausströmanschlüsse 108, 109, 110, 122 vorgesehen, welche an eine obere Halteplatte 112 angeschlossen sind. Auf die obere Halteplatte 112 ist ein oberes Anschlussteil 114 angesetzt und an die untere Halteplatte 111 ein unteres Anschlussteil 113.

Die Halteplatten 111, 112 mit den dazwischen angeordneten Trockenmittelbehältern 102, 103, 104, 105 sind um eine Drehachse 115 gegenüber den Anschlussteilen 113, 114 drehbar. Man erkennt in der Position, wie sie in Figur 5 dargestellt ist, dass der Trockenmitteltopf 104 im Regenerationsbetrieb vorliegt. D.h., Anschlüsse 119, 118 der Anschlussteile 113, 114 lassen einen Fluiddurchfluss nur durch den Trockenmitteltopf 104 zu. Dazu sind in Figur 5 entsprechende Kanäle in den Anschlussteilen 113, 114 vorgesehen.

Die Anschlussteile 113, 114 umfassen kuppelartige Mischkammern 116, 117, welche ein gleichzeitiges Durchströmen der Trockenmitteltöpfe 103, 102, 105 im Trockenbetrieb erlauben, und welche in äußere Anschlusstutzen münden. Eine Drehung um die Achse 115 erfolgt getaktet, so dass in der Ausführungsform der Figur 5 immer drei der vier Trockenmitteltöpfe im Trocknungsbetrieb arbeiten und ein Trockenmitteltopf im Regenerationsbetrieb. Die Drehung erfolgt getaktet, so dass keine kontinuierliche Drehung erfolgt, sondern immer fest definierte Betriebszustände für die Trockenmitteltöpfe gegeben sind.

Obwohl die vorliegende Erfindung anhand bevorzugter Ausführungsbeispiele näher erläutert wurde, ist sie nicht darauf beschränkt, sondern vielfältig modifizierbar.

## Patentansprüche

1. Vorrichtung (1) zum Trocknen von einem Fluid (26), insbesondere von feuchter Luft, mit mindestens drei Behältern (2, 3, 4) für Trockenmittel (11), welche jeweils eine Einlassöffnung (5, 6, 7) und eine Auslassöffnung (8, 9, 10) umfassen, einer ersten und einer zweiten Halteplatte (12, 13), wobei die Einlassöffnungen (5, 6, 7) an die erste Halteplatte (12) und die Auslassöffnungen (8, 9, 10) an die zweite Halteplatte (13) gekoppelt sind, und die Halteplatten (12, 13) jeweils Durchlässe (14 - 19) für durch die Einlassöffnungen (5, 6, 7) oder durch die Auslassöffnungen (8, 9, 10) strömendes Fluid (26 - 29) umfassen, mit einem ersten Anschlussteil (20), welches auf der ersten Halteplatte (12) anliegt und eine erste Mischkammer (22) zum Aufteilen eines Fluidstroms von einem ersten gemeinsamen Anschluss (24) auf mindestens zwei der Durchlässe (14, 15) aufweist, und einem zweiten Anschlussteil (21), welches auf der zweiten Halteplatte (13) anliegt und eine zweite Mischkammer (23) zum Zusammenführen eines Fluidstroms durch mindestens zwei der Durchlässe (17, 18) zu einem zweiten gemeinsamen Anschluss (25) aufweist, wobei die Halteplatten (12, 13) und die Anschlussteile (20, 21) gegeneinander drehbar angeordnet sind.

2. Vorrichtung (1) nach Anspruch 1, wobei das erste Anschlussteil (20) ferner einen Führungsabschnitt (49) zum Leiten eines Fluidstroms (28, 29) von einem ersten weiteren Anschluss (51) durch einen dritten Durchlass (16) umfasst und das zweite Anschlussteil (21) ferner einen Führungsabschnitt (50) zum Leiten eines Fluidstroms (28, 29) durch einen dritten Durchlass (19) zu einem zweiten weiteren Anschluss (52) umfasst.

3. Vorrichtung (1) nach Anspruch 1 oder 2, wobei das erste Anschlussteil (20) und das zweite Anschlussteil (21) jeweils ein Langloch (34) umfasst, welches die mindestens zwei Durchlässe (14, 15, 16, 17) überdeckt.

4. Vorrichtung (1) nach einem der Ansprüche 1 - 3, wobei die Mischkammer (22, 23) in der Art einer Kappe die mindestens zwei Durchlässe (14, 15, 16, 17) in der jeweiligen Halteplatte (12, 13) abdeckt.

5. Vorrichtung (1) nach einem der Ansprüche 1 - 4, wobei die Behälter (2, 3, 4) als zylindrische Trockenmitteltöpfe ausgeführt sind und eine jeweilige Einlassöffnung und Auslassöffnung an gegenüberliegenden Grundflächen angeordnet ist.

6. Vorrichtung (100) nach einem der Ansprüche 2 - 5, ferner mit einer Heizeinrichtung (44) zum Erzeugen von erwärmten Regenerationsfluid, wobei das erwärmte Regenerationsfluid dem ersten oder dem zweiten weiteren Anschluss (51 ,52) zugeführt ist.

7. Vorrichtung (100) nach Anspruch 6, mit einer Antriebseinrichtung (41) zum Drehen der Halteplatten (12, 13) mit den zwischen den Halteplatten (12, 13) angeordneten Behältern (2, 3, 4) und einer Steuereinrichtung (43), welche die Antriebseinrichtung (41) derart steuert, dass die Halteplatten (12, 13) und die Anschlussteile (20, 21) so positioniert sind, dass nacheinander taktweise jeweils ein Behälter (2, 3, 4) von erwärmtem Regenerationsfluid durchströmt wird, und gleichzeitig eine Fließverbindung für zu trocknendes Fluid von der ersten Mischkammer (22) zu der zweiten Mischkammer (23) vorliegt.

8. Vorrichtung (100) nach einem der Ansprüche 2 - 6, ferner mit einer Temperaturmesseinrichtung (48) zum Erfassen einer Fluidtemperatur an dem ersten und/oder zweiten weiteren Anschluss (51, 52).

9. Vorrichtung (1) nach einem der Ansprüche 2 - 8, wobei das erste Anschlussteil (20) und das zweite Anschlussteil (21) ferner jeweils einen weiteren Führungsabschnitt (35) zum Leiten eines Fluidstroms zu einem weiteren Anschluss umfassen, wobei der weitere Führungsabschnitt (35) einen geringeren Querschnitt hat als der erste Führungsabschnitt (33).

10. Verfahren zum Betreiben einer Vorrichtung (1) zum Trocknen von einem Fluid nach einem der Ansprüche 1 - 9, wobei die Halteplatten (12, 13) mit den zwischen den Halteplatten (12, 13) angeordneten Behältern (2, 3 ,4) derart taktweise gegenüber den Anschlussteilen (20, 21) gedreht werden, dass ein Behälter (4) von erwärmtem Regenerationsfluid durchströmt wird, und gleichzeitig eine Fließverbindung für zu trocknendes Fluid von der ersten Mischkammer (22) zu der zweiten Mischkammer (23) vorliegt.
